# EUROPÄISCHE PATENTSCHRIFT

(11) **EP 2 866 053 B1**
(45) Veröffentlichungstag und Bekanntmachung des Hinweises auf die Patenterteilung: **05.06.2019**
(21) Anmeldenummer: 14189429.5
(22) Anmeldetag: 17.10.2014
(51) Int. Cl.: G01S 19/14, G01S 15/02, E02F 3/00, E02F 9/26

(54) **Verfahren zum Kalibrieren der Position einer Baumaschine in einem Baustellenplan**
Method for calibrating the position of a construction machine in a construction site plan
Procédé d'étalonnage de la position d'un engin dans un plan de chantier

(30) Priorität: 21.10.2013 DE 102013221301
(43) Veröffentlichungstag der Anmeldung: 29.04.2015
(73) Patentinhaber: MTS Maschinentechnik Schrode AG, 72534 Hayingen (DE)
(72) Erfinder: Nohlen, Ulrike, 72531 Hohenstein (DE); Goebel, Bernd, 72525 Münsingen-Dottingen (DE); Schrode, Rainer, 88529 Zwiefalten (DE)
(74) Vertreter: DREISS Patentanwälte PartG mbB

(56) Entgegenhaltungen:
- EP-A1- 2 040 030
- WO-A1-2014/146809
- DE-A1- 10 158 392
- DE-A1- 10 160 084
- US-A1- 2006 173 600

## Beschreibung

Die Erfindung betrifft ein Verfahren zum Kalibrieren der Position einer Baumaschine in einem Baustellenplan gemäß dem Anspruch 1 und eine Baumaschine gemäß dem Anspruch 11.

Die US 2006/0173600 A1 beschreibt ein System, mit dem einer Baumaschine automatisch und drahtlos von einem zentralen Server die der aktuellen Position der Baumaschine entsprechenden Projektdaten übermittelt werden. Zu diesen Projektdaten gehören auch Parameter, mit denen Koordinaten eines globalen Positionsbestimmungssystems in lokale Positionsdaten umgerechnet werden können.

Die DE 101 58 392 A1 beschreibt ein Verfahren zur Bestimmung einer Position und Ausrichtung einer Arbeitsmaschine. Hierzu wird ein Arbeitswerkzeug der Arbeitsmaschine periodisch an einem Referenzpunkt positioniert.

### Bekannte globale satellitengestützte

Positionsbestimmungssysteme messen im sog. WGS84-Koordinatensystem. Die Landesvermessung und das Kataster, wie auch viele Ingenieurbüros arbeiten dagegen in Gauss-Krüger-Koordinaten oder in UTM-Koordinaten. WGS84-Koordinaten lassen sich unter verschiedenen Annahmen (verwendete Ellipsoide) mit üblichen Algorithmen in Gauss-Krüger- oder UTM-Koordinaten umrechnen.

Aufgrund lokaler Gegebenheiten (Geoidundulationen, Netzspannungen) bleibt ein erheblicher Restfehler von Dezimetern bis Metern. Damit in den Koordinaten des Baustellenplans gearbeitet werden kann, müssen daher Passpunkte gemessen werden, deren Koordinaten in beiden Koordinatensystemen vorliegen. So werden die Parameter einer Helmert-Transformation ermittelt (Verschiebung und Maßstab in einer oder drei Achsen, Drehung).

Diese Messung wird normalerweise von einem Vermesser (Vermessungstechniker, Vermessungsingenieur oder auch einem Bauleiter) durchgeführt, der dazu einen sogenannten Satellitenrover verwendet. Die Koordinaten-Transformationsparameter werden in einer Datei gespeichert und an eine Steuereinrichtung einer Baumaschine, beispielsweise einen Tablet-PC, übergeben.

Das bekannte Verfahren ist jedoch relativ aufwändig und zeitintensiv. Aufgabe der vorliegenden Erfindung ist es daher, ein schnell durchführbares und einfaches Verfahren zum Kalibrieren der Position einer Baumaschine in einem Baustellenplan zu schaffen.

Diese Aufgabe wird gelöst durch das in Anspruch 1 angegebene Verfahren und die in Anspruch 11 definierte Baumaschine. Vorteilhafte Weiterbildungen sind in Unteransprüchen angegeben. Für die Erfindung wichtige Merkmale finden sich ferner in der nachfolgenden Beschreibung in der Zeichnung.

Das erfindungsgemäße Verfahren hat den Vorteil, dass die Kalibrierung der Position der Baumaschine in den Koordinaten des Baustellenplans unmittelbar erfolgt und daher Zeit gespart wird. Durch Bolzenspiel, Ungenauigkeiten der Baumaschineneinmessung und ungeübte Handhabung ist zwar die Genauigkeit reduziert, diese ist aber immer noch ausreichend für einfache Erdarbeiten, was bei einer vordefinierten Koordinatentransformation nicht der Fall ist. Außerdem können auf diese Weise auch völlig verdrehte Baustellenpläne als Grundlage genommen werden, wie es bei kleinen, nicht in beispielsweise Landeskoordinaten geplanten Bauvorhaben üblich ist. Beispielsweise kann es sein, dass der Plan eines Architekten nicht eingenordet sondern für den Ausdruck auf ein Papierformat optimiert ist, so dass "Norden" nicht oben ist.

In einer Weiterbildung wird vorgeschlagen, dass die Baumaschine ein Bagger und das Referenzteil eine Löffelspitze sind. Dies ist eine besonders häufige Anwendungsform, bei der die Vorteile des erfindungsgemäßen Verfahrens besonders deutlich zu Tage treten.

In einer anderen Weiterbildung wird vorgeschlagen, dass für den Referenzort eine Größe ermittelt wird, welche eine Genauigkeit der ermittelten Koordinaten-Transformationsparameter charakterisiert. Damit erhält der Baumaschinenführer einen Hinweis auf die Genauigkeit, mit der er seine Arbeiten ausführen kann.

In einer Weiterbildung hierzu wird vorgeschlagen, dass das Verfahren für eine Mehrzahl von Referenzorten durchgeführt und die Koordinaten-Transformationsparameter so ermittelt werden, dass eine Genauigkeit an allen Referenzorten wenigstens in etwa gleich ist. Hierdurch wird die Genauigkeit erhöht.

In einer Weiterbildung hierzu wird vorgeschlagen, eine Messung an einem Referenzort mit einer Genauigkeit, die schlechter ist als ein Grenzwert, nicht berücksichtigt wird. Hierdurch wird die Genauigkeit nochmals erhöht.

In einer Weiterbildung wird vorgeschlagen, dass in einem ersten Verfahrensabschnitt der Baumaschinenführer eine aktuelle Position des Referenzteils im Koordinatensystem des Baustellenplans abschätzt und mittels einer Eingabeeinrichtung eingibt, und dann eine erste Ermittlung von Koordinaten-Transformationsparametern unter Berücksichtigung der erfassten Koordinaten des globalen Positionsbestimmungssystems an der aktuellen Position und der bekannten Koordinaten des Baustellenplans der abgeschätzten aktuellen Position. Somit wird als erster Passpunkt kein im Baustellenplan vorhandener Punkt verwendet, sondern dem Baumaschinenführer beispielsweise per Fingertip (bei einem Touchscreen) die Eingabe ermöglicht: "hier ungefähr bin ich im Plan". Unter der Annahme, dass der Plan nicht in der Richtung verdreht ist, können dann die Passpunkte leichter aufgefunden werden. Außerdem ist dieses Verfahren intuitiver als die Auswahl abstrakter Punkte. Durch die geschätzte Eingabe des eigenen Standorts vor der Messung des ersten Passpunktes kann die Baumaschine bereits sinnvoll auf dem dem Baumaschinenführer angezeigten Baustellenplan bewegt werden. Dabei ist aus Erfahrung bekannt, dass es Baumaschinenführern geläufig ist, den eigenen Standort auf einem Baustellenplan abzuschätzen. Diese erste Schätzung wird ab dem nächsten, spätestens ab dem übernächsten Passpunkt verworfen. Dadurch geht die Ungenauigkeit der ersten Schätzung nicht ins Ergebnis ein. Es sei an dieser Stelle darauf hingewiesen, dass dieses Verfahren nicht auf die Anwendung bei einer Baumaschine beschränkt ist, sondern beispielsweise auch bei der aus dem Stand der Technik bekannten Kalibrierung mittels eines Satellitenrovers verwendet werden kann und insoweit eine eigenständige Erfindung ist.

In einer Weiterbildung wird vorgeschlagen, dass der Passpunkt ein punktförmiger Ort, insbesondere ein Grenzpunkt, eine Schachtdeckelmitte, ein Pflock, ein Vermessungspunkt, eine Hausecke, oder ein Ort auf einer Linie, insbesondere einem Straßenrand, einer Baugrenze oder einem Wandverlauf, ist. Es ist ein mathematisch lösbares Problem, statt Punkten eine ausreichende Anzahl von Linien aufzunehmen und daraus die Koordinaten-Transformationsparameter zu ermitteln. Linienförmige Elemente sind weit häufiger in der Baustellenrealität und im entsprechenden Baustellenplan zu finden als die eher seltenen punktförmigen Passpunkte. Es sei an dieser Stelle wieder darauf hingewiesen, dass dieses Verfahren nicht auf die Anwendung bei einer Baumaschine beschränkt ist, sondern beispielsweise auch bei der aus dem Stand der Technik bekannten Kalibrierung mittels eines Satellitenrovers verwendet werden kann und insoweit eine eigenständige Erfindung darstellt.

In einer Weiterbildung wird vorgeschlagen, dass das globale Positionsbestimmungssystem satellitengestützt ist, insbesondere ein Differential-GPS-System ist. Dieses ist preiswert und ausreichend genau.

In einer Weiterbildung wird vorgeschlagen, dass bei einer Umstellung von der Verwendung von Korrekturdaten eines Basisreferenzempfänger eines Differential-GPS auf die Verwendung von Korrekturdaten eines Korrekturdatendienstes und umgekehrt eine Aufforderung an den Baumaschinenführer ausgegeben wird, das Verfahren nach den Schritten a-e auszuführen, und hieraus korrigierte Koordinaten-Transformationsparameter zu bestimmen. Wenn erkannt wird, dass bereits eine Kalibrierung der Position der Baumaschine in dem Baustellenplan vorgenommen wurde, und dazu ein eigener Basisreferenzempfänger die Korrekturdaten für die Bestimmung der WGS84-Koordinaten geliefert hat, dann kann die gleiche Baustelle nicht mit denselben Koordinaten-Transformationsparametern betrieben werden, wenn nun statt dem Basisreferenzempfänger ein Korrekturdatendienst, der die Korrekturdaten beispielsweise per Internet liefert, verwendet wird. Die Differenz besteht allerding meist nur aus einer Verschiebung, so dass erfindungsgemäß in den meiste Fällen vorgesehen wird, dass der Baumaschinenführer aufgefordert wird, lediglich noch einen Passpunkt zu messen. die neuen Koordinaten-Transformationsparameter werden dann automatisch berechnet. Die Erkennung, welcher Art die Korrekturdaten sind, kann ebenfalls automatisiert werden. Damit ist es später möglich zwischen Basisreferenzempfänger oder Korrekturdatendienst hin- und herzuschalten.

In einer Weiterbildung wird vorgeschlagen, dass eine Festlegung einer Rotationstransformation vom Baumaschinenführer unterdrückt werden kann.

Nachfolgend wird die Erfindung beispielhaft unter Bezugnahme auf die beiliegende Zeichnung erläutert. In der Zeichnung zeigen:
- Figur 1: eine Baumaschine in Form eines Baggers mit einer Einrichtung zum Kalibrieren der Position der Baumaschine in einem Baustellenplan; und
- Figur 2: eine Darstellung einer Anzeige der Einrichtung zum Kalibrieren zu unterschiedlichen Zeitpunkten während der Durchführung eines Verfahrens zum Kalibrieren der Position der Baumaschine in dem Baustellenplan.

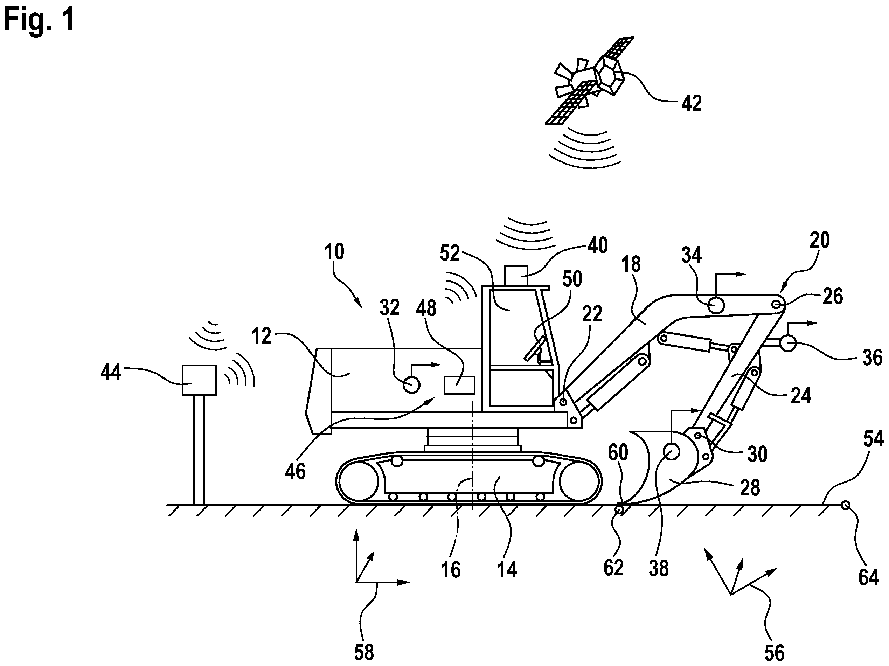

Eine Baumaschine in Form eines Baggers trägt in Figur 1 insgesamt das Bezugszeichen 10. Der Bagger 10 umfasst ein Oberteil 12 und ein fahrbares Unterteil 14. Das Oberteil 12 ist gegenüber dem Unterteil 14 um eine Achse 16 drehbar. An dem Oberteil 12 ist ein erstes Segment 18 eines Baggerarms 20 um eine senkrecht zur Bildebene verlaufende Achse 22 hydraulisch schwenkbar befestigt. An dem ersten Segment 18 ist ein zweites Segment 24 um eine senkrecht zur Bildebene verlaufende Achse 26 hydraulisch schwenkbar befestigt. An dem zweiten Segment 24 ist ein Baggerlöffel 28 um eine senkrecht zur Bildebene verlaufende Achse 30 hydraulisch schwenkbar befestigt.

Am Oberteil 12, ersten Segment 18, zweiten Segment 24 und Baggerlöffel 28 ist jeweils ein Positions- und Neigungssensor 32, 34, 36 bzw. 38 angeordnet. Ferner verfügt der Bagger 10 über ein globales Positionsbestimmungssystem in Form eines nur schematisch dargestellten Differential-GPS-Systems 40, welches Signale von Satelliten 42 und von einem stationären Basisreferenzempfänger 44 erhält. Schließlich verfügt der Bagger 10 noch über eine Einrichtung 46 zum Kalibrieren seiner Position in einem Baustellenplan, welche Einrichtung 46 einen Computer 48 und eine Anzeige- und Eingabeeinrichtung in Form eines Touchscreens 50 in einem Führerstand 52 des Baggers 10 umfasst.

Der Computer 48 erhält die Signale des Differential-GPS-Systems 40 sowie der Positions- und Neigungssensoren 32-38. In Kenntnis der Geometrie des Baggers 10, insbesondere des Oberteils 12, des Baggerarms 20 und des Baggerlöffels 28, kann der Computer aus der mittels des Differential-GPS 40 ermittelten Position und aus den Signalen der der Positions- und Neigungssensoren 32-38 unter Anwendung trigonometrischer Zusammenhänge die exakte Position einer Spitze 60 des Baggerlöffels 28 ermitteln. Diese Spitze 60 wird nachfolgend auch als "Referenzteil" bezeichnet.

Der Bagger 10 befindet sich auf einer Baustelle 54. Das Differential-GPS-System 40 misst die Position des Baggers 10 im sog. WGS84-Koordinatensystem, welches in Figur 1 schematisch dargestellt und mit 56 bezeichnet ist. Auch die Position des Referenzteils 60 liegt somit zunächst nur im WGS84-Koordinatensystem 56 vor. Ein Baustellenplan der Baustelle 54, der ebenso wie die Position der Baggerlöffelspitze bzw. des Referenzteils 60 auf dem Touchscreen 50 dargestellt wird, damit ein Baggerführer die Baustelle plangemäß bearbeiten kann, liegt dagegen in einem ebenfalls nur schematisch angedeuteten Koordinatensystem 58 des Baustellenplans vor. Hierbei kann es sich beispielsweise um Gauss-Krüger-Koordinaten oder UTM-Koordinaten handeln.

WGS84-Koordinaten lassen sich unter verschiedenen Annahmen (verwendete Ellipsoide) mit üblichen Algorithmen in Gauss-Krüger- oder UTM-Koordinaten umrechnen. Aufgrund lokaler Gegebenheiten (Geoidundulationen, Netzspannungen) bleibt jedoch ein erheblicher Restfehler von Dezimetern bis Metern. Damit in dem Koordinatensystem 58 des Baustellenplans gearbeitet werden kann, müssen daher, wie nachfolgend erläutert werden wird, sogenannte Passpunkte gemessen werden, deren Koordinaten in beiden Koordinatensystemen 56 und 58 vorliegen. So werden die Koordinaten-Transformationsparameter einer Helmert-Transformation ermittelt. Die Koordinaten-Transformationsparameter werden in einer Datei auf einem Speicher des Computers 48 gespeichert und erlauben die genaue Anzeige der Position der Baggerlöffelspitze 60 in dem Baustellenplan auf dem Touchscreen 50.

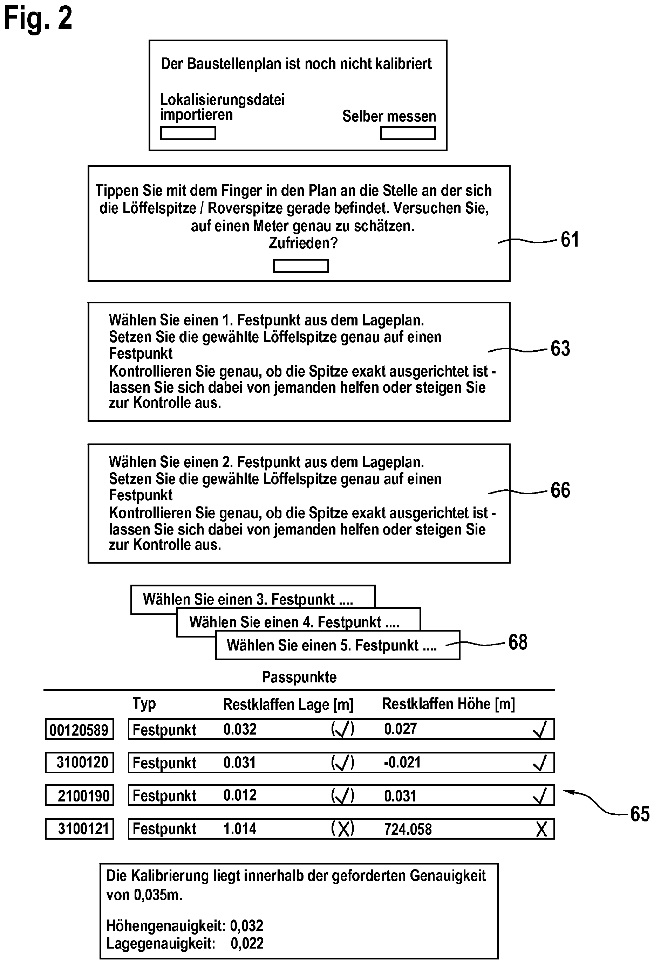

Zur Ermittlung der Koordinaten-Transformationsparameter wird wie folgt vorgegangen:
Zunächst wird vom Baggerführer der Baustellenplan der Baustelle 54 auf dem Touchscreen 50 aufgerufen, so dass er auf dem Touchscreen 50 dargestellt wird. Dann schätzt der Baggerführer in einem ersten Verfahrensabschnitt eine aktuelle Position des Referenzteils 60 im Koordinatensystem 58 des Baustellenplans ab und gibt diese auf dem Touchscreen 50 ein, indem er einfach mit dem Finger auf die entsprechende Position im dargestellten Baustellenplan tippt (Bezugszeichen 61 in Figur 2). Der Computer 48 berechnet nun automatisch Koordinaten-Transformationsparameter, und zwar unter Berücksichtigung der aktuellen Position des Referenzteils 60 im Koordinatensystem 56 des globalen Positionsbestimmungssystems und der vom Baggerführer abgeschätzten aktuellen Position des Referenzteils im Koordinatensystem 58 des Baustellenplans.

Als Folge wird die Position des Referenzteils 60 auf dem Touchscreen 50 bereits mit einer gewissen Genauigkeit im Baustellenplan angezeigt.

In einem zweiten Verfahrensabschnitt wird der Baggerführer durch eine entsprechende Anzeige auf dem Touchscreen 50 aufgefordert (Bezugszeichen 63 in Figur 2), auf dem dargestellten Baustellenplan einen ersten dort dargestellten Passpunkt auszuwählen (in Figur 1 beispielhaft mit 62 bezeichnet). Bei dem Passpunkt 62 kann es sich um einen punktförmigen Ort, beispielsweise einen Grenzpunkt, eine Schachtdeckelmitte, einen Pflock, einen Vermessungspunkt, eine Hausecke, oder einen Ort auf einer Linie, insbesondere eines Straßenrand, einer Baugrenze oder eines Wandverlaufs, handeln. Nach der durchgeführten Auswahl wird der Baggerführer aufgefordert, das Referenzteil 60 möglichst exakt auf den gewählten Passpunkt 62 aufzusetzen. Das Finden dieses Passpunktes 62 wird dem Baggerführer dadurch erleichtert, dass die Position des Referenzteils 60 auf dem Touchscreen 50 bereits mit einer gewissen Genauigkeit im Baustellenplan angezeigt wird.

Wenn das Referenzteil 60 auf dem Passpunkt 62 aufgesetzt ist, bestätigt dies der Baggerführer durch eine entsprechende Eingabe am Touchscreen 50. Wiederum berechnet der Computer 48 nun automatisch Koordinaten-Transformationsparameter unter Berücksichtigung der aktuellen Position des Referenzteils 60 im Koordinatensystem 56 des Differential-GPS-Systems 40 und der Position des Passpunkts 62 im Koordinatensystem 58 des Baustellenplans. Nach erfolgter Berechnung ermittelt der Computer 48 eine Genauigkeit der ermittelten Koordinaten-Transformationsparameter, und zwar in Form eines sog. "Restklaffens", also einer möglichen maximalen Abweichung mit einer absoluten Längenangabe, beispielsweise in cm (Bezugszeichen 65 in Figur 2).

Zur Erhöhung der Genauigkeit und um eine mögliche Rotation zu erkennen wird der Baggerführer durch eine entsprechende Anzeige auf dem Touchscreen 50 aufgefordert (Bezugszeichen 66 in Figur 2), auf dem dargestellten Baustellenplan einen zweiten dort dargestellten Passpunkt auszuwählen (in Figur 1 beispielhaft mit 64 bezeichnet). Auch bei dem Passpunkt 64 kann es sich um einen punktförmigen Ort, beispielsweise einen Grenzpunkt, eine Schachtdeckelmitte, einen Pflock, einen Vermessungspunkt, eine Hausecke, oder einen Ort auf einer Linie, insbesondere eines Straßenrands, einer Baugrenze oder eines Wandverlaufs, handeln.

Nach der durchgeführten Auswahl wird der Baggerführer wieder aufgefordert, das Referenzteil 60 möglichst exakt auf den gewählten zweiten Passpunkt 64 aufzusetzen.

Wenn das Referenzteil 60 auf dem Passpunkt 64 aufgesetzt ist, bestätigt dies der Baggerführer durch eine entsprechende Eingabe am Touchscreen 50. Wiederum berechnet der Computer 48 nun automatisch Koordinaten-Transformationsparameter unter Berücksichtigung der aktuellen Position des Referenzteils 60 im Koordinatensystem 56 des Differential-GPS-Systems 40 und der Position des Passpunkts 64 im Koordinatensystem 58 des Baustellenplans. Dabei ermittelt der Computer 48 wieder eine Genauigkeit der ermittelten Koordinaten-Transformationsparameter. Durch einen iterativen Prozess werden nun solche Koordinaten-Transformationsparameter ermittelt, bei denen die Genauigkeit an den beiden Passpunkten 62 und 64 wenigstens in etwa gleich ist.

Dieser Vorgang kann zur weiteren Verbesserung der Genauigkeit mit weiteren Passpunkten noch mehrmals wiederholt werden (Bezugszeichen 68 in Figur 2), wobei es vorteilhaft ist, wenn eine Messung an einem Passpunkt mit einer Genauigkeit, die schlechter ist als ein Grenzwert, bei der Iteration nicht berücksichtigt wird.

Nach Abschluss des Verfahrens sind - im Normalfall - die Koordinaten-Transformationsparameter mit einer so ausreichenden Genauigkeit ermittelt, dass der Baggerführer nun die ihm vom auf dem Touchscreen 50 angezeigten Baustellenplan vorgegebenen Baggerarbeiten ausreichend präzise ausführen kann.

Im Einzelfall kann eine Situation auftreten, in der nach Ausführung des oben beschriebenen Verfahrens von der Verwendung von Korrekturdaten des Basisreferenzempfängers 44 zur Erhöhung der Genauigkeit der Positionsbestimmung auf eine Verwendung von solchen Korrekturdaten gewechselt wird, die von einem internetbasierten Korrekturdatendienst zur Verfügung gestellt werden. Der Computer 48 ist so programmiert, dass er eine solche Umstellung automatisch detektiert und dann über den Touchscreen 50 eine Aufforderung an den Baggerführer ausgibt, das oben genannte Verfahren mindestens für einen Passpunkt auszuführen, und hieraus korrigierte Koordinaten-Transformationsparameter bestimmt.

## Patentansprüche

1. Verfahren zum Kalibrieren der Position einer Baumaschine (10) in einem Baustellenplan, gekennzeichnet mindestens durch folgende Schritte:
a. Darstellen des Baustellenplans auf einer Anzeigeeinrichtung (50) der Baumaschine (10);
b. Ausgeben einer Anweisung auf der Anzeigeeinrichtung (50) an einen Baumaschinenführer, einen bestimmten Teil (Referenzteil) (60) der Baumaschine (10) an mindestens einen bestimmten Ort (Passpunkt) (62, 64) zu bewegen, dessen Koordinaten im Koordinatensystem (58) des Baustellenplans bekannt sind;
c. Bewegen des Referenzteils (60) an den Passpunkt (62, 64);
d. Erfassen der Position des Referenzteils (60) am Passpunkt (62, 64) mittels eines globalen Positionsbestimmungssystems (40) in den Koordinaten (56) des globalen Positionsbestimmungssystems (40),
e. Ermitteln von Koordinaten-Transformationsparametern durch einen Computer unter Berücksichtigung der erfassten Koordinaten des globalen Positionsbestimmungssystems am Passpunkt (62, 64) und der bekannten Koordinaten des Passpunkts (62, 64) des Baustellenplans.

2. Verfahren nach Anspruch 1, **dadurch gekennzeichnet, dass** im Schritt a der Baustellenplan auf einem Touchscreen (50) dargestellt wird; der Schritt b das Erzeugen einer Anweisung durch einen Computer (48) und Ausgeben der Anweisung durch eine entsprechende Anzeige auf dem Touchscreen (50) umfasst; und das Verfahren einen zusätzlichen Schritt f umfasst, in dem die Position des Referenzteils (60) in dem Baustellenplan auf dem Touchscreen (50) unter Verwendung der ermittelten Koordinaten-Transformationsparameter angezeigt wird.

3. Verfahren nach einem der Ansprüche 1 oder 2, **dadurch gekennzeichnet, dass** die Baumaschine ein Bagger (10) und das Referenzteil eine Baggerlöffelspitze (60) sind.

4. Verfahren nach einem der vorhergehenden Ansprüche, **dadurch gekennzeichnet, dass** für den Passpunkt (62, 64) eine Größe ermittelt wird, welche eine Genauigkeit der ermittelten Koordinaten-Transformationsparameter charakterisiert.

5. Verfahren nach Anspruch 4, **dadurch gekennzeichnet, dass** es für eine Mehrzahl von Passpunkten (62, 64) durchgeführt und die Koordinaten-Transformationsparameter so ermittelt werden, dass eine Genauigkeit an allen Passpunkten (62, 64) wenigstens in etwa gleich ist.

6. Verfahren nach Anspruch 5, **dadurch gekennzeichnet, dass** eine Messung an einem Passpunkt (62, 64) mit einer Genauigkeit, die schlechter ist als ein Grenzwert, nicht berücksichtigt wird.

7. Verfahren nach einem der vorhergehenden Ansprüche, **dadurch gekennzeichnet, dass** in einem ersten Verfahrensabschnitt der Baumaschinenführer eine aktuelle Position des Referenzteils (60) im Koordinatensystem (58) des Baustellenplans abschätzt und mittels einer Eingabeeinrichtung (50) eingibt, und dann eine erste Ermittlung von Koordinaten-Transformationsparametern unter Berücksichtigung der erfassten Koordinaten des globalen Positionsbestimmungssystems an der aktuellen Position und der bekannten Koordinaten des Baustellenplans der abgeschätzten aktuellen Position.

8. Verfahren nach einem der vorhergehenden Ansprüche, **dadurch gekennzeichnet, dass** der Passpunkt (62, 64) ein punktförmiger Ort, insbesondere ein Grenzpunkt, eine Schachtdeckelmitte, ein Pflock, ein Vermessungspunkt, eine Hausecke, oder ein Ort auf einer Linie, insbesondere einem Straßenrand, einer Baugrenze oder einem Wandverlauf, ist.

9. Verfahren nach einem der vorhergehenden Ansprüche, **dadurch gekennzeichnet, dass** das globale Positionsbestimmungssystem satellitengestützt ist, insbesondere ein Differential-GPS-System (40) ist.

10. Verfahren nach Anspruch 9, **dadurch gekennzeichnet, dass** bei einer Umstellung von der Verwendung von Daten eines Basisreferenzempfänger (44) eines Differential-GPS (40) auf die Verwendung von Daten eines Korrekturdatendienstes und umgekehrt eine Aufforderung an den Baumaschinenführer ausgegeben wird, das Verfahren nach den Schritten a-e auszuführen, und hieraus korrigierte Koordinaten-Transformationsparameter zu bestimmen.

11. Baumaschine, insbesondere Bagger (10), **dadurch gekennzeichnet, dass** sie eine Einrichtung (46) zum Kalibrieren der Position der Baumaschine (10) in einem Baustellenplan aufweist, die zur Durchführung eines Verfahrens der vorhergehenden Ansprüche programmiert ist.

## Claims

1. Method for calibrating the position of a construction machine (10) in a construction site plan, characterised at least by the following steps:
a. depiction of the site plan on a display device (50) of the construction machine (10);
b. output of an instruction on the display device (50) to a machine operator to move a specific part (reference part) (60) of the construction machine (10) to at least one specific location (pass point) (62, 64), the coordinates of which are known in the coordinate system (58) of the site plan;
c. moving of the reference part (60) to the pass point (62, 64);
d. by means of a global positioning system (40), establishment of the position of the reference part (60) at the pass point (62, 64) in the coordinates (56) of the global positioning system (40),
e. determination of coordinate transformation parameters by a computer, taking into account the established coordinates of the global positioning system at the pass point (62, 64) and the known coordinates of the pass point (62, 64) of the construction site plan.

2. Method according to claim 1, **characterised in that** in step a, the construction site plan is depicted on a touchscreen (50); step b comprises the generation of an instruction by a computer (48) and output of the instruction via a corresponding display on the touchscreen (50); and the method comprises an additional step f in which the position of the reference part (60) in the construction site plan is displayed on the touchscreen (50) using the determined coordinate transformation parameter.

3. Method according to one of claims 1 or 2, **characterised in that** the construction machine is an excavator (10), and the reference part is the tip (60) of the excavator bucket.

4. Method according to any of the preceding claims, **characterised in that** a value is determined for the pass point (62, 64), which characterises an accuracy of the determined coordinate transformation parameter.

5. Method according to claim 4, **characterised in that** it is performed for a plurality of pass points (62, 64), and the coordinate transformation parameters are determined such that an accuracy is at least approximately the same at all pass points (62, 64).

6. Method according to claim 5, **characterised in that** a measurement at a pass point (62, 64) with an accuracy which is worse than a threshold value is not taken into account.

7. Method according to any of the preceding claims, **characterised in that** in a first method step, the machine operator estimates a current position of the reference part (60) in the coordinate system (58) of the construction site plan and enters this by means of an input device (50), and then coordinate transformation parameters are firstly determined taking into account the established coordinates of the global positioning system at the current position and the known coordinates of the estimated current position in the construction site plan.

8. Method according to any of the preceding claims, **characterised in that** the pass point (62, 64) is a spot location, in particular a border point, a shaft cover centre, a picket, a survey point, a house corner, or a location on a line, in particular a road edge, a site boundary or a wall course.

9. Method according to any of the preceding claims, **characterised in that** the global positioning system is satellite-supported, in particular is a differential GPS system (40).

10. Method according to claim 9, **characterised in that** on conversion from the use of data from a base reference receiver (44) of a differential GPS (40) to use of data from a correction data service, and vice versa, the machine operator is invited to carry out the method according to steps a-e and from this determine corrected coordinate transformation parameters.

11. Construction machine, in particular an excavator (10), **characterised in that** it has a device (46) for calibrating the position of the machine (10) in a construction site plan, which device is programmed to perform a method described in the preceding claims.

## Revendications

1. Procédé d'étalonnage de la position d'un engin de chantier (10) dans un plan de chantier, caractérisé au moins par les étapes ci-dessous consistant à:
a. représenter le plan de chantier sur un dispositif d'affichage (50) de l'engin de chantier (10);
b. éditer une instruction sur le dispositif d'affichage (50) à l'intention d'un opérateur d'engin de chantier afin qu'il déplace une partie spécifique (partie de référence) (60) de l'engin de chantier (10) vers au moins un emplacement spécifique (point de contrôle) (62, 64) dont les coordonnées au sein du système de coordonnées (58) du plan de chantier sont connues;
c. déplacer la partie de référence (60) vers le point de contrôle (62, 64);
d. détecter la position de la partie de référence (60) dans les coordonnées (56) du système de positionnement global (40) au niveau du point de contrôle (62, 64) au moyen d'un système de positionnement global (40),
e. déterminer des paramètres de transformation de coordonnées grâce à un ordinateur en prenant en compte les coordonnées détectées du système de positionnement global au niveau du point de contrôle (62, 64) et les coordonnées connues du point de contrôle (62, 64) du plan de chantier.

2. Procédé selon la revendication 1, **caractérisé en ce qu'**à l'étape a, le plan de chantier est représenté sur un écran tactile (50); l'étape b comprend la génération d'une instruction par un ordinateur (48) et l'édition de l'instruction grâce à un affichage correspondant sur l'écran tactile (50); et le procédé comprend une étape supplémentaire f consistant à afficher la position de la partie de référence (60) dans le plan de chantier sur l'écran tactile (50) en utilisant les paramètres de transformation de coordonnées déterminés.

3. Procédé selon l'une quelconque des revendications 1 ou 2, **caractérisé en ce que** l'engin de chantier est une excavatrice (10) et la partie de référence est une pointe de godet d'excavatrice (60).

4. Procédé selon l'une quelconque des revendications précédentes, **caractérisé en ce qu'**une valeur caractérisant une précision des paramètres de transformation de coordonnées déterminés est déterminée pour le point de contrôle (62, 64).

5. Procédé selon la revendication 4, **caractérisé en ce qu'**il est mis en oeuvre pour une pluralité de points de contrôle (62, 64) et **en ce que** les paramètres de transformation de coordonnées sont déterminés de sorte qu'une précision est au moins à peu près identique au niveau de tous les points de contrôle (62, 64).

6. Procédé selon la revendication 5, **caractérisé en ce qu'**une mesure effectuée au niveau d'un point de contrôle (62, 64) et présentant une précision inférieure à une valeur limite n'est pas prise en compte.

7. Procédé selon l'une quelconque des revendications précédentes, **caractérisé en ce que** dans une première partie du procédé, l'opérateur de l'engin de chantier estime une position actuelle de la partie de référence (60) dans le système de coordonnées (58) du plan de chantier et l'entre à l'aide d'un dispositif d'entrée (50), puis une première détermination des paramètres de transformation de coordonnées est effectuée avec prise en compte des coordonnées détectées du système de positionnement global au niveau de la position actuelle et des coordonnées de plan de chantier connues de la position actuelle estimée.

8. Procédé selon l'une quelconque des revendications précédentes, **caractérisé en ce que** le point de contrôle (62, 64) est un emplacement ponctuel, en particulier un point limite, un centre de plaque de regard, un piquet, un point de surveillance, un angle de bâtiment ou un emplacement sur une ligne, en particulier un bord de route, une limite cadastrale ou un tracé de mur.

9. Procédé selon l'une quelconque des revendications précédentes, **caractérisé en ce que** le système de positionnement global fait appel à un satellite, et est en particulier un système GPS différentiel (40).

10. Procédé selon la revendication 9, **caractérisé en ce que**, lors d'un passage de l'utilisation de données d'un récepteur de référence de base (44) d'un GPS différentiel (40) à l'utilisation de données d'un service de données de correction et inversement, une demande est éditée à l'intention de l'opérateur d'engin de chantier afin qu'il mette en oeuvre les étapes a à e du procédé et détermine ainsi les paramètres de transformation de coordonnées corrigés.

11. Engin de chantier, en particulier excavatrice (10), **caractérisé en ce qu'**il présente un dispositif (46) destiné à l'étalonnage de la position de l'engin de chantier (10) dans un plan de chantier et programmé pour mettre en oeuvre un procédé selon les revendications précédentes.
